Europäisches Patentamt

European Patent Office

Office européen des brevets

(11) Veröffentlichungsnummer: **0 270 116**
**A2**

(12) **EUROPÄISCHE PATENTANMELDUNG**

(21) Anmeldenummer: 87117904.0

(22) Anmeldetag: 03.12.87

(51) Int. Cl.4: **E04B 1/19**

(30) Priorität: 03.12.86 YU 2069/86

(43) Veröffentlichungstag der Anmeldung:
**08.06.88 Patentblatt 88/23**

(84) Benannte Vertragsstaaten:
**AT BE CH DE FR GB IT LI LU NL SE**

(71) Anmelder: **Sostaric, Karlo**
**Ilica 47**
**YU-41000 Zagreb(YU)**

(72) Erfinder: **Sostaric, Karlo**
**Ilica 47**
**YU-41000 Zagreb(YU)**

(74) Vertreter: **Winter, Konrad Theodor, Dipl.-Ing.**
**et al**
**Patentanwaltsbüro Tiedtke- Bühling- Kinne-**
**Grupe- Pellmann- Grams- Struif- Winter-**
**Roth Bavariaring 4**
**D-8000 München 2(DE)**

(54) **Knotenpunktkonstruktion für ein Raumtragwerk.**

(57) Eine Knotenpunktkonstruktion für ein Raumtragwerk, in dem eine Vielzahl von Stäben zusammenlaufen und mittels eines Verbindungselementes miteinander gekoppelt sind, weist das Verbindungselement ein Mittelteil, an dessen Ober-und Unterseite jeweils erste kuglige Ausnehmungen ausgebildet sind, und zwei Aufsatzteile auf, die jeweils zweite kuglige Ausnehmungen aufweisen und derart auf die Ober-bzw. Unterseite des Mittelteils aufsetzbar sind, daß die zweiten kugligen Ausnehmungen mit den ersten kugligen Ausnehmungen in Übereinstimmung angeordnet sind. Im Zusammenwirken der ersten und zweiten kugligen Ausnehmungen sind Lager-und Befestigungspunkte für kugelförmige Anschlußelemente der Stäbe des Raumtragwerks gebildet. Das Mittelteil und die Aufsatzteile des Verbindungselementes werden mittels einer Befestigungsvorrichtung miteinander verspannt. Die ersten kugligen Ausnehmungen an der Ober-und der Unterseite des Mittelteils sind jeweils mit gleichem gegenseitigen Umfangsabstand angeordnet, wobei jedoch die an der Oberseite des Mittelteils angeordneten kugligen Ausnehmungen in Umfangsrichtung relativ zu den an der Unterseite des Mittelteils angeordneten kugligen Ausrichtungen versetzt sind.

FIG.1

Xerox Copy Centre

## Knotenpunktkonstruktion für ein Raumtragwerk

Die Erfindung bezieht sich auf eine Knotenpunktkonstruktion für ein Raumtragwerk gemäß dem Oberbegriff des Anspruchs 1.

Raumtragwerke finden heutzutage sowohl in der Gestaltung von Bauwerken, insbesondere als deren Dach-und Deckenkonstruktion, als auch bei Gebrauchsgegenständen, etwa bei Regalsystem, Verwendung. Darüber hinaus werden sie häufig eingesetzt, um Konstruktionen zu bilden, die häufig an verschiedenen Orten auf-und abgbaut werden, da sie es ermöglichen, diese Konstruktionen in einfacher Weise an die jeweils herrschenden räumlichen Gegebenheiten anzupassen. Dabei stellt die zu ihrem Auf-bzw. Abbau benötigte Zeit einen wesentlichen Parameter für die Beurteilung der Wirtschaftlichkeit derartiger Raumtragwerke dar.

Raumtragwerke weisen eine Vielzahl von Stäben auf, die in Knotenpunkten zusammenlaufen und dort mittels Verbindungselementen aneinander befestigt sind. Üblicherweise werden die Verbindungselemente von Kugeln oder ähnlichem gebildet, in die die Stäbe eingeschraubt bzw. mittels spezieller Schraubverbindungen befestigt werden. Das Einschrauben der Stäbe in die Verbindungselemente bzw. das Ausbilden der speziellen Schraubverbindungen ist sehr zeitaufwendig und erfordert darüber hinaus Spezialwerkzeuge, so daß eine Verwendung derartiger Raumtragwerke für einen Heimwerker bzw. einen Nichtfachmann nicht oder nur unter großen finanziellen Aufwand möglich ist.

Der Erfindung liegt die Aufgabe zugrunde, eine Knotenpunktkonstruktion für ein Raumtragwerk zu - schaffen, die einen einfachen und raschen Auf-und Abbau des Raumtragwerks ermöglicht.

Diese Aufgabe wird erfindungsgemäß durch die Knotenpunktkonstruktion für ein Raumtragwerk gemäß Patentanspruch 1 gelöst.

Zur Montage der erfindungsgemäßen Knotenpunktkonstruktion für ein Raumtragwerk ist es lediglich notwendig, die kugelförmigen Anschlußelemente der Stäbe des Raumtragwerks in die kugligen Ausnehmungen des Mittelteils sowie des entsprechenden Aufsatzteils einzusetzen und diese mittels der Befestigungsvorrichtung miteinander zu verspannen. Dadurch sind die Stäbe gelenkig an die Knotenpunktkonstruktion angeschlossen, so daß das Auftreten von Einspannmomenten vermieden ist. Wenn gemäß Anspruch 2 insgesamt sechs Lager-und Befestigungspunkte vorgesehen sind, d.h. wenn zwischen dem Mittelteil und jedem Aufsatzteil jeweils drei Lager-und Befestigungspunkte ausgebildet sind, können an einem Knotenpunkt sechs Stäbe angeschlossen werden, die in den vertikalen und horizontalen Raumrichtungen verlaufen können. Dabei ergibt sich der zusätzliche Vorteil, daß die Orientierung der Stäbe innerhalb weiter Grenzen variiert werden kann, so daß Raumtragwerke unterschiedlichster Struktur geschaffen werden können.

Die identische Ausbildung der beiden Aufsatzteile gemäß Anspruch 3 erleichtert den Zusammenbau, da einer bestimmten Orientierung oder Anordnung seiner Bauteile nur eine geringe Beachtung geschenkt zu werden braucht.

Wenn die Kontaktfläche zwischen dem Mittelteil und dem Aufsatzteil als Kugelfläche bzw. kugelförmige Senke und das Aufsatzteil in Linsenform ausgestaltet ist, wird das Positionieren des Aufsatzteils bezüglich des Mittelteils erleichtert, da beim Einsetzen des Aufsatzteils eine Selbstzentrierung erfolgt. Darüber hinaus liegen das Mittelteil und das Aufsatzteil über eine große Fläche aneinander an, wodurch die beim gegenseitigen Verspannen auftretenden Spannungen verringert sind und ein gleichmäßiger Kraftfluß zwischen diesen Teilen erzielt wird.

Wenn die Befestigungsvorrichtung gemäß Anspruch 9 als Spannschraube ausgebildet wird, die die Aufsatzteile und das Mittelteil durchdringt, kann die gegenseitige Verspannung dieser Bauteile in einfacher Weise erreicht werden, ohne daß spezielles Werkzeug oder ein besonderes Fachwissen erforderlich ist. Dies ermöglicht die Verwendung der erfindungsgemäßen Knotenpunktkonstruktion auch im privaten Bereich durch einen Heimwerker oder einen Nichtfachmann. Selbst Kinder können mittels der erfindungsgemäßen Knotenpunktkonstruktion Raumtragwerke ausbilden, so daß diese als Spielzeug oder als Baukasten Verwendung finden können.

Die Anordnung der Spannschraube gemäß Anspruch 10 gewährleistet eine gleichmäßige Verteilung der Spannkraft in der Spannschraube und den zu verspannenden Bauteilen und verhindert ein Auftreten von Einspannmomenten infolge Exzentrizitäten.

Wenn die Lager-und Befestigungspunkte für die Stäbe an dem Verbindungselement gemäß Anspruch 14 um jeweils 90° gegeneinander versetzt sind, können mittels der erfindungsgemäßen Knotenpunktkonstruktion auch rechtwinklige Raumecken in einfacher Weise ausgebildet werden, wie sie beispielsweise bei der Konstruktion von Quadern oder Würfelelementen notwendig sind, die als Wohnmöbel Verwendung finden können.

Wenn die erfindungsgemäße Knotenpunktkonstruktion für Raumtragwerke bei Gebäuden als Dach-oder Deckenkonstruktion oder ähnlichem Verwendung finden soll, ist es vorteilhaft, wenn das Verbindungselement aus einem Metall, vorzugsweise aus Stahl, besteht. Bei der Verwendung für Wohnmöbel oder als Kinderspielzeug kann es ggf. sinnvoll sein, die erfindungsgemäße Knotenpunktkonstruktion aus einem Kunststoff zu fertigen, da eine derartige Knotenpunktkonstruktion einfacher zu verarbeiten ist und eine geringere Unfall-bzw. Verletzungsgefahr mit sich bringt. Darüber hinaus kann ein Kunststoff in einfacher Weise farbig ausgebildet werden, so daß den an Wohnmöbel und Spielzeug gestellten hohen Ansprüchen und Erwartungen bezüglich eines ästhetischen Designs Rechnung getragen werden kann.

Weitere Ziele, Anwendungen und Vorteile der Erfindung werden aus der folgenden ausführlichen Beschreibung eines bevorzugten Ausführungsbeispiels unter Bezugnahme auf die beigefügten Zeichnungen vollständig ersichtlich.

Fig. 1 zeigt die einzelnen Bauteile eines Verbindungselementes in Explosionsdarstellung und

Fig. 2 zeigt eine montierte Knotenpunktkonstruktion für ein Raumtragwerk in perspektivischer Darstellung.

Gemäß den Figuren weist ein Verbindungselement 10 ein Mittelteil 1 auf, das im wesentlichen die Gestalt eines kugelschichtförmigen Tonnenkörpers hat. Die Ober-und die Unterseite des Mittelteils 1 sind als kuglige Senken ausgebildet und weisen am Rand jeweils drei erste kuglige Ausnehmungen 2 auf, die den gleichen gegenseitigen Umfangsabstand aufweisen, d.h. die in einem gegenseitigen Umfangs abstand von 120° stehen. Eine Bohrung 4 verläuft entlang der Mittelachse A-A des Mittelteils 1 und durchdringt dieses. Die an der Oberseite des Mittelteils 1 ausgebildeten ersten kugligen Ausnehmungen 2 sind relativ zu den an der Unterseite des Mittelteils 1 ausgebildeten ersten kugligen Ausnehmungen 2 jeweils in Umfangsrichtung versetzt angeordnet, wobei der Versatz 60° beträgt.

Auf die Ober-und Unterseite des Mittelteils 1 ist jeweils ein Aufsatzteil 5 aufsetzbar, dessen dem Mittelteil zugewandte Oberfläche an die Gestalt der kugligen Senke der Ober-bzw. Unterseite des Mittelteils 1 derart angepaßt ist, daß die Aufsatzteile 5 und das Mittelteil 1 im montierten Zustand vollflächig aneinander anliegen. In der dem Mittelteil 1 zugewandten Oberfläche jedes Aufsatzteils 5 sind am Rand drei zweite kuglige Ausnehmungen 6 derart ausgebildet, daß sie mit den ersten kugligen Ausnehmungen 2 des Mittelteils 1 in Übereinstimmung gebracht werden können, wenn das Aufsatzteil 5 auf die Ober-bzw. Unterseite des Mittelteils 1 aufgesetzt ist. Im montierten Zustand bilden die ersten und zweiten kugligen Ausnehmungen zwei bzw. sechs im Zusammenwirken Lager-und Befestigungspunkte für kugelförmige Anschlußelemente 13 von Stäben 12 des Raumtragwerks. Die kugelförmigen Anschlußelemente 13 werden in diese Lager-und Befestigungspunkte eingesetzt und von diesen gehalten, indem die ersten und zweiten kugligen Ausnehmungen 2 und 6 im Zusammenwirken etwa zwei Drittel des Umfangs der kugelförmigen Anschlußelemente 13 umgreifen und diese somit gelenkig festhalten.

Die dem Mittelteil 1 abgewandte Oberfläche jedes Aufsatzteils 5 ist als Kugelfläche ausgebildet, deren Radius an das als kugelschichtförmigen Tonnenkörper ausgebildete Mittelteil 1 angepaßt ist. Nachdem die Aufsatzteile 5 auf das Mittelteil 1 aufgesetzt sind, weist das Verbindungselement 10 somit im wesentlichen eine Kugelform auf.

Da die Ober-und Unterseite des Mittelteils 1, wie oben beschrieben wurde, als kuglige Senke ausgebildet sind, weist das Aufsatzteil 5 somit eine sphärisch-bikonvexe Linsenform auf.

Jedes Aufsatzteil 5 ist mit einer Mittelbohrung 7 versehen, die mit der Bohrung 4 des Mittelteils 1 fluchtet, wenn die Aufsatzteile 5 auf das Mittelteil 1 aufgesetzt sind. Über die Mittelbohrungen 7 und die Bohrung 4 können die Aufsatzteile 5 und das Mittelteil 1 mittels einer nicht dargestellten Befestigungsvorrichtung, beispielsweise in Form einer Spannschraube, miteinander verspannt werden. Dabei verläuft die Längsachse der Spannschraube entlang der Mittelachse A-A des Verbindungselementes 10 und im wesentlichen senkrecht zu den Kontaktflächen zwischen den Aufsatzteilen 5 und dem Mittelteil 1.

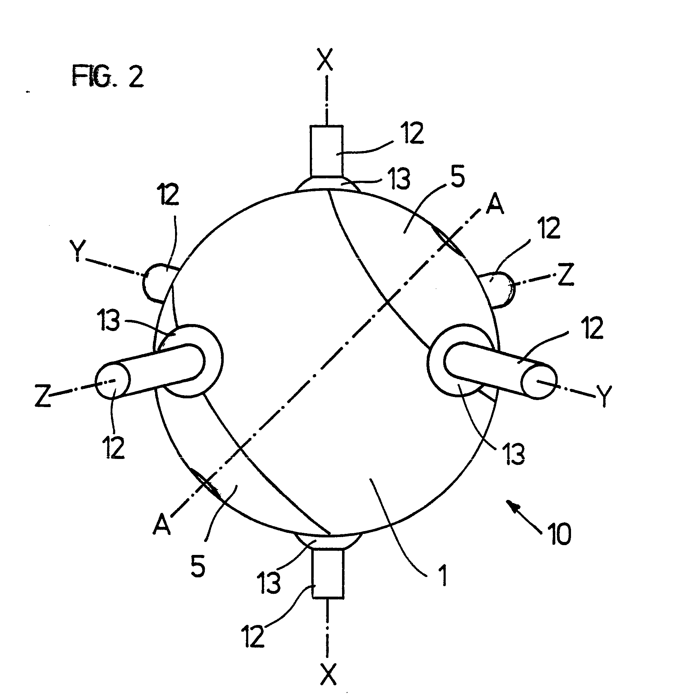

In Fig. 2 sind die einzelnen Bauteile des Verbindungselementes 10 im montierten Zustand dargestellt. Dabei sind in den jeweiligen Hauptraumrichtungen, d.h. in Richtung der Horizontalachse Z-Z der Horizontalachse Y-Y und der Vertikalachse X-X, jeweils zwei Stäbe 12 angeordnet, die an ihrem Ende jeweils das kugelförmige Anschlußelement 13 tragen. Die kugelförmigen Anschlußelemente 13 sind jeweils über die Lager-und Befestigungspunkte mit dem Verbindungselement 10 gekoppelt, indem die in diesem ausgebildeten kugligen Ausnehmungen das kugelförmige Anschlußelement 13 in ausreichendem Maße umgreifen.

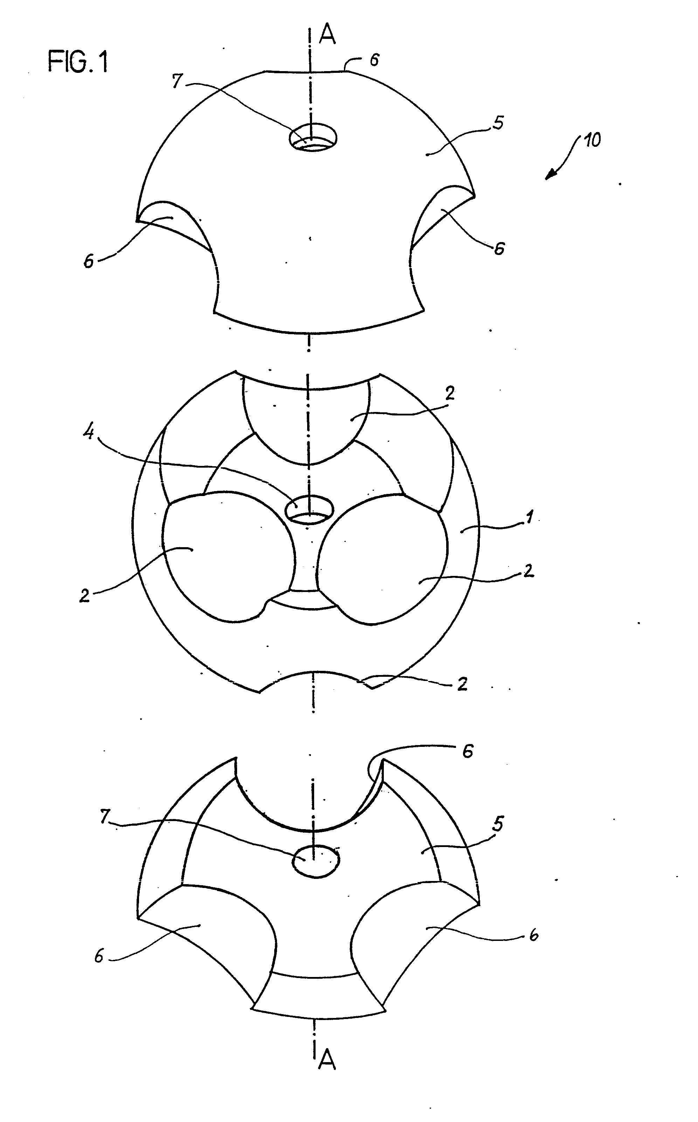

Die Lager-und Befestigungselemente sind jeweils um 90° gegeneinander versetzt an der Oberfläche des Verbindungselementes 10 angeordnet, so daß Stäbe 12 unterschiedlicher Hauptrichtung unter einem rechten Winkel zueinander verlaufen. Wie in der Fig. 2 dargestellt ist, verläuft dabei die Mittelachse A-A des Verbindungselementes 10 in Richtung der Raumdiagonale des durch die Achsen X, Y und Z aufgespannten Raumes und das Verbindungselement 10 ist gegenüber der in Fig. 1 dargestellten aufrechten Stellung um 45° geneigt angeordnet. Dadurch ist erreicht, daß vier Lager-und Befestigungspunkte des Verbindungselementes 10 in einer Ebene, d.h. beispielsweise in der Y-Z-Ebene, liegen. Wenn die Stäbe 12 allerdings unter einem anderen Winkel bezüglich der Hauptachsen verlaufen, so kann das Verbindungselement 10 entsprechend anders orientiert sein.

Die erfindungsgemäße Knotenpunktkonstruktion für ein Raumtragwerk ist nicht auf kugelförmig Verbindungselemente beschränkt. Es ist beispielsweise auch möglich, quaderförmige oder quadratische Verbindungselemente anzuordnen. Im Gegensatz zum dargestellten Ausführungsbeispiel ist es möglich, das Mittelteil und die Aufsatzteile derart auszubilden, daß sie im montierten Zustand nicht aneinander anliegen, sondern der Kraftfluß vollständig über die eingesetzten kugelförmigen Anschlußelemente der Stäbe verläuft. In seltenen Fällen kann es notwendig sein, mehr als sechs Stäbe in einem Knotenpunkt eines Raumtragwerks zu verbinden. In diesem Fall sollten in der Ober- und der Unterseite des Mittelteils sowie in den Aufsatzteilen entsprechend mehrere kuglige Ausnehmungen ausgebildet sein.

Auch die Form der Aufsatzteile kann variiert werden, beispielsweise derart, daß eine Zentrierung der Aufsatz teile mit dem Mittelteil, ermöglicht ist. Eine Grundform als Kugelsegment könnte dazu herangezogen werden.

Vorstehend ist nur ein Ausführungsbeispiel der Erfindung erläutert worden. Es liegt jedoch für den Fachmann auf der Hand, daß zahlreiche Änderungen und Abwandlungen ausführbar sind, ohne den Rahmen und den Grundgedanken der Erfindung zu verlassen.

Eine Knotenpunktkonstruktion für ein Raumtragwerk, in dem eine Vielzahl von Stäben zusammenlaufen und mittels eines Verbindungselementes miteinander gekoppelt sind, weist das Verbindungselement ein Mittelteil, an dessen Ober- und Unterseite jeweils erste kuglige Ausnehmungen ausgebildet sind, und zwei Aufsatzteile auf, die jeweils zweite kuglige Ausnehmungen aufweisen und derart auf die Ober-bzw. Unterseite des Mittelteils aufsetzbar sind, daß die zweiten kugligen Ausnehmungen mit den ersten kugligen Ausnehmungen in Übereinstimmung angeordnet sind. Im Zusammenwirken der ersten und zweiten kugligen Ausnehmungen sind Lager-und Befestigungspunkte für kugelförmige Anschlußelemente der Stäbe des Raumtragwerks gebildet. Das Mittelteil und die Aufsatzteile des Verbindungselementes werden mittels einer Befestigungsvorrichtung miteinander verspannt. Die ersten kugligen Ausnehmungen an der Ober-und der Unterseite des Mittelteils sind jeweils mit gleichem gegenseitigen Umfangsabstand angeordnet, wobei jedoch die an der Oberseite des Mittelteils angeordneten kugligen Ausnehmungen in Umfangsrichtung relativ zu den an der Unterseite des Mittelteils angeordneten kugligen Ausrichtungen versetzt sind.

## Ansprüche

1. Knotenpunktkonstruktion für ein Raumtragwerk, in dem eine Vielzahl von Stäben zusammenlaufen und mittels eines Verbindungselementes miteinander gekoppelt sind, dadurch gekennzeichnet, daß das Verbindungselement (10) ein Mittelteil (1), an dessen Ober-und Unterseite jeweils erste kuglige Ausnehmungen (2) ausgebildet sind, und zwei Aufsatzteile (5) aufweist, die jeweils zweite kuglige Ausnehmungen (6) aufweisen und derart auf die Ober-bzw. Unterseite des Mittelteils (1) aufsetzbar sind, daß die zweiten kugligen Ausnehmungen (6) der Aufsatzteile (5) in Übereinstimmung mit den ersten kugligen Ausnehmungen (2) des Mittelteils (1) angeordnet sind und diese zusammen Lager-und Befestigungspunkte für kugelförmige Anschlußelemente (13) der Stäbe (12) des Raumtragwerks bilden, wobei das Mittelteil (1) und die Aufsatzteile (5) mittels einer Befestigungsvorrichtung miteinander verspannt sind.

2. Knotenpunktkonstruktion für ein Raumtragwerk nach Anspruch 1, dadurch gekennzeichnet, daß an der Ober-und der Unterseite des Mittelteils (1) jeweils drei erste kuglige Ausnehmungen (2) und an jedem Aufsatzteil (5) jeweils drei zweite kuglige Ausnehmungen (6) ausgebildet sind.

3. Knotenpunktkonstruktion für ein Raumtragwerk nach Anspruch 1 oder 2, dadurch gekennzeichnet, daß die beiden Aufsatzteile (5) eine identische Form aufweisen.

4. Knotenpunktkonstruktion für ein Raumtragwerk nach einem der Ansprüche 1 bis 3, dadurch gekennzeichnet, daß das Verbindungselement (10) im wesentlichen kugelförmig ist.

5. Knotenpunktkonstruktion für ein Raumtragwerk nach einem der Ansprüche 1 bis 4, dadurch gekennzeichnet, daß das Mittelteil (1) die Gestalt eines kugelschichtförmigen Tonnenkörpers aufweist.

6. Knotenpunktkonstruktion für ein Raumtragwerk nach einem der Ansprüche 1 bis 5, dadurch gekennzeichnet, daß die Aufsatzteile (5) die Gestalt von Kugelabschnitten aufweisen.

7. Knotenpunktkonstruktion für ein Raumtragwerk nach einem der Ansprüche 1 bis 5, dadurch gekennzeichnet, daß die Aufsatzteile (5) eine sphärisch-bikonvexe Form aufweisen.

8. Knotenpunktkonstruktion für ein Raumtragwerk nach einem der Ansprüche 1 bis 7, dadurch gekennzeichnet, daß die Trennungsfläche zwischen dem Mittelteil (1) und den Aufsatzteilen (5) jeweils im wesentlichen eine Kugelfläche ist.

9. Knotenpunktkonstruktion für ein Raumtragwerk, dadurch gekennzeichnet, daß die Befestigungsvorrichtung eine Spannschraube umfaßt, die die Aufsatzteile (5) und das Mittelteil (1) an in Fluchtung befindlichen Bohrungen (4, 7) durchdringt.

10. Knotenpunktkonstruktion für ein Raumtragwerk nach Anspruch 9, dadurch gekennzeichnet, daß die Spannschraube im wesentlichen senkrecht zu den Kontaktflächen zwischen den Aufsatzteilen (5) und dem Mittelteil (1) verläuft.

11. Knotenpunktkonstruktion für ein Raumtragwerk nach einem der Ansprüche 1 bis 10, dadurch gekennzeichnet, daß die ersten kugligen Ausnehmungen (2) an der Ober-und der Unterseite des Mittelteils (1) jeweils in gleichem Umfangsabstand zueinander angeordnet sind.

12. Knotenpunktkonstruktion für ein Raumtragwerk nach Anspruch 11, dadurch gekennzeichnet, daß die ersten kugligen Ausnehmungen (2) an der Oberseite des Mittelteils (1) in Umfangsrichtung jeweils relativ zu den ersten kugligen Ausnehmungen (2) an der Unterseite des Mittelteils (1) versetzt angeordnet sind.

13. Knotenpunktkonstruktion für ein Raumtragwerk nach Anspruch 12, dadurch gekennzeichnet, daß die ersten kugligen Ausnehmungen (2) an der Oberseite des Mittelteils (1) in Umfangsrichtung jeweils um 60° relativ zu den ersten kugligen Ausnehmungen (2) an der Unterseite des Mittelteils (1) versetzt angeordnet sind.

14. Knotenpunktkonstruktion für ein Raumtragwerk nach einem der Ansprüche 1 bis 13, dadurch gekennzeichnet, daß die Lager-und Befestigungspunkte für die kugelförmigen Anschlußelemente (13) der Stäbe (12) um jeweils 90° gegeneinander versetzt an der Oberfläche des Verbindungselements (10) angeordnet sind.

15. Knotenpunktkonstruktion für ein Raumtragwerk nach einem der Ansprüche 1 bis 14, dadurch gekennzeichnet, daß das Verbindungselement (10) aus einem metallischen Werkstoff besteht.

16. Knotenpunktkonstruktion für ein Raumtragwerk nach Anspruch 15, dadurch gekennzeichnet, daß das Verbindungselement (10) aus Stahl besteht.

17. Knotenpunktkonstruktion für ein Raumtragwerk nach einem der Ansprüche 1 bis 14, dadurch gekennzeichnet, daß das Verbindungselement (10) aus einem Kunststoff-Werkstoff besteht.

FIG.1

0 270 116

FIG. 2